# EUROPEAN PATENT SPECIFICATION

(11) **EP 2 707 993 B1**
(45) Date of publication and mention of the grant of the patent: **25.12.2019**
(21) Application number: 12781646.0
(22) Date of filing: 09.05.2012
(51) Int. Cl.: H04L 12/28, H04L 29/08

(54) **METHOD AND SYSTEM FOR SHARING DEVICE CAPABILITIES OF UNIVERSAL PLUG AND PLAY (UPNP) DEVICES WITH A SERVICE NETWORK ENTITY**
VERFAHREN UND SYSTEM ZUR GEMEINSAMEN NUTZUNG VON VORRICHTUNGSKAPAZITÄTEN VON UNIVERSELLEN PLUG-AND-PLAY (UPNP)-VORRICHTUNGEN MIT EINER DIENSTNETZWERKEINHEIT
PROCÉDÉ ET SYSTÈME DE PARTAGE DE CAPACITÉS DE DISPOSITIF DE DISPOSITIFS PRÊT À L'EMPLOI UNIVERSEL (UPNP) AVEC UNE ENTITÉ DE RÉSEAU DE SERVICE

(30) Priority: 09.05.2011 IN 1609CH2011
(43) Date of publication of application: 19.03.2014
(73) Proprietor: Samsung Electronics Co., Ltd., Suwon-si, Gyeonggi-do 443-742 (KR)
(72) Inventor: PATIL, Mayuresh Madhukar, Bangalore 560093 (IN); PATTAN, Basavaraj Jayawant, Bangalore 560093 (IN); JEEDIGUNTA, Venkateswar, Bangalore 560093 (IN)
(74) Representative: HGF Limited
(86) International application number: PCT/KR2012/003650
(87) International publication number: WO 2012/153983

(56) References cited:
- WO-A1-2010/087748
- US-A1- 2004 052 233
- US-A1- 2005 289 559
- US-A1- 2009 180 484
- US-A1- 2009 282 458
- US-A1- 2010 040 211
- US-A1- 2010 223 339
- US-A1- 2010 262 467
- US-A1- 2011 002 341
- US-A1- 2011 060 994
- "Wireless application group user agent profile specification", WAG UAPROF, XX, XX, 10 November 1999 (1999-11-10), pages 1-76, XP002962021,
- Yoshiki Nishikawa ET AL: "TelephonyArchitecture:1 Contents", , 22 March 2011 (2011-03-22), XP055569822, Retrieved from the Internet: URL:http://upnp.org/specs/phone/UPnP-phone -TelephonyArchitecture-v1.pdf [retrieved on 2019-03-15]

## Description

### Technical Field

The present invention generally relates to the field of universal plug and play (UPnP) system, and more particularly relates to sharing device capabilities of UPnP devices with a service provider entity.

### Background Art

Universal Plug and Play (UPnP) is a set of computer network protocols promulgated by the UPnP forum. The goals of UPnP are to allow access to connect seamlessly and to simplify implementation of networks in home (e.g., data sharing, communications, and entertainment) and corporate environments. These goals are achieved by defining and publishing UPnP device control protocols built upon open, Internet-based communication standards.

The UPnP technology can cater to a wide range of devices in a home network. The UPnP technology provides discovery, control and eventing mechanisms. Using these mechanisms, UPnP makes availability and unavailability of the UPnP devices on the fly to the other devices in the UPnP home network.

UPnP architecture allows peer-to-peer networking of personal computers (PCs), networked appliances, and wireless devices. It is distributed, open architecture based on established standards such as transport control protocol/Internet protocol (TCP/IP), user datagram protocol (UDP), hypertext transfer protocol (HTTP) and extended mark-up language (XML). The UPnP architecture supports zero configuration networking. For example, an UPnP compatible device from any vendor can dynamically join a network, obtain an Internet Protocol (IP) address, announce its name, convey its capabilities upon request, and learn about the presence and capabilities of other devices. On the other hand, the UPnP devices can leave the UPnP home network automatically without leaving any unwanted state information.

The foundation for UPnP networking is Internet Protocol (IP) addressing. Each UPnP device includes a dynamic host configuration protocol (DHCP) client which searches for a DHCP server when the UPnP device is first connected to the UPnP network. If no DHCP server is available, the UPnP device assigns itself an IP address. If during the DHCP transaction, the UPnP device obtains a domain name, for example, through a domain name system (DNS) server or via DNS forwarding, the UPnP device uses that name in subsequent network operations; otherwise the UPnP device uses its IP address.

The UPnP forum also provides telephony services for extending user experience in a home to access telephony services like messaging service, presence service, and call handling (PS/CS call) service. As analogous to UPnP DA, the UPnP telephony defines three kinds of devices, viz. a telephony server (TS) that provides messaging, and presence related services to the user, a telephony control point (TelCP) to initiate actions provided by the TS and a telephony client device (TC) for media related handling and providing input and output to/from the TS.

WO-2010/087748-A1 discloses a method of provisioning and configuration of services for a plurality of user devices associated with a user subscribing to the services at a service provider, where the user devices are arranged in a personal network of the user and associated with a plurality of gateway devices in the network, providing a list of the user devices at an intermediate server device, receiving a requests for provisioning, at the intermediate server device, on at least one user device. Subsequently, the server device initiates provisioning on at least one user device. Finally, the list is updated at the server device, and the server device optionally notifies the service provider of the update.

US-2010/223339-A1 discloses a method and arrangement, in a multimedia gateway connected to a multimedia service network, for providing access to multimedia services for communication devices connected to a private network. In the multimedia gateway, a communication unit receives a request from a device in the private network for a public identity associated with the multimedia gateway. An identity manager then selects and allocates an associated public identity from a pool of public identities associated with the multimedia gateway which have been predefined as valid in the multimedia service network. The communication unit then registers the device by activating the allocated associated public identity in the multimedia service network. Thereby, the multimedia gateway can establish a multimedia session on behalf of the device, using the allocated associated public identity.

US 2004/052233 discloses a data communication system and a method in a data communication system comprising a terminal, e.g. a mobile phone, adapted to communicate with an application server using a wireless transmission protocol, preferably WAP, including a terminal profile. The wireless transmission protocol also includes an attached device's profile that is dynamically updated with data related to a device attached to the terminal.

US 2009/282458 discloses a system and method for remote and local compound device capabilities synchronization.

US 2010/040211 discloses a system and method for transmitting and receiving a call on a home network.

### Disclosure of Invention

### Technical Problem

UPnP telephony has defined an interface which allows telephony user to access telephony services using non-telephony devices. Therefore, in the UPnP home network environment, the telephony user may extend telephony services to UPnP devices such as non-telephony devices (e.g., television). Currently, telephony services delivered on the non-telephony devices may render poor user experience to the telephony user as the service provider is not aware of capabilities of the non-telephony devices in an UPnP home network environment. Typically, device capabilities are provided to the service provider via a user agent profile (UaProf) provided by the Open Mobile Alliance (OMA). However, existing user agent profile does not allow the telephony user to communicate device capabilities of UPnP devices (especially non-telephony devices) with the service provider

### Solution to Problem

According to a first aspect of the present invention there is provided a method by a telephony server for sharing device capabilities of client devices with a service provider entity, the method being in accordance with claim 1.

According to a second aspect of the present invention there is provided a telephony server for sharing device capabilities of client devices with a service provider entity, the telephony server being in accordance with claim 7.

According to a third aspect of the present invention there is provided a system for sharing device capabilities of client devices with a service provider entity, the system being in accordance with claim 9.

According to a fourth aspect of the present invention there is provided a system for sharing device capabilities of telephony control points with a service provider entity, the system being in accordance with claim 10.

According to a fifth aspect of the present invention there is provided a method by a telephony server for sharing device capabilities of telephony control points with a service provider entity, the method being in accordance with claim 13.

### Brief Description of Drawings

Figure 1 illustrates a block diagram of a system for sharing device capabilities associated with Universal Plug and Play (UPnP) devices with a service provider server, according to one embodiment.
Figure 2 is a flow diagram illustrating an exemplary method of sharing device capabilities associated with UPnP devices with the service provider server, according to one embodiment.
Figure 3 is a block diagram of a system for sharing device capabilities of Telephony Control Points (TelCPs) with the service provider server, according to another embodiment.
Figure 4 is a flow diagram illustrating an exemplary method of sharing device capabilities associated with UPnP devices with the service provider server, according to another embodiment.
Figure 5 is a schematic representation illustrating an exemplary phone data model containing device capabilities of UPnP devices, according to one embodiment.
Figure 6A is a schematic representation illustrating an exemplary user agent profile with device capabilities of UPnP devices, according to one embodiment.
Figure 6B is a schematic representation illustrating an exemplary user agent profile 650, according to another embodiment.
Figure 7 illustrates a block diagram of an exemplary telephony server showing various components for implementing embodiments of the present subject matter.
Figure 8 illustrates a block diagram of an exemplary telephony control point showing various components for implementing embodiments of the present subject matter.

The drawings described herein are for illustration purposes only and are not intended to limit the scope of the present disclosure in any way.

### Mode for the Invention

The present invention provides a method and system of sharing device capabilities of Universal Plug and Play (UPnP) devices with a service provider entity. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

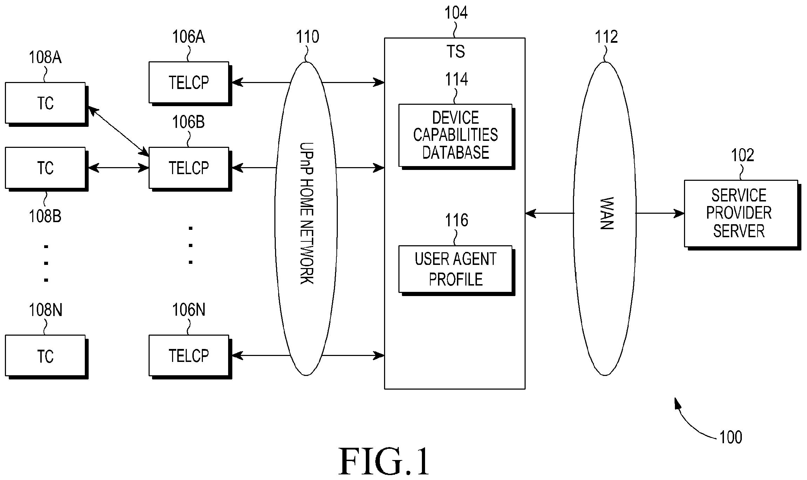

Figure 1 illustrates a block diagram of a system 100 for sharing device capabilities associated with UPnP devices with a service provider entity, according to one embodiment. In Figure 1, the system 100 includes a service provider server 102, a telephony server (TS) 104, telephony control points (TelCPs) 106A-N and telephony clients (TCs) 108A-N. In the system 100, the TS 104, the TelCPs 106A-N and the TCs 108A-N belong to an UPnP home network environment and communicate with each other using UPnP protocol.

The TS 104 may include telephony device such as smart phone, personal digital assistant, tablet PC and the like capable of communicating with the TelCPs 106A-N and the service provider server 102. The TelCPs 106A-N and the TCs 108A-N may include telephony devices and non-telephony devices such as mobile phones, tablets, televisions, sound system, displays, and the like devices. It is appreciated that, the non-telephony devices such as television, displays, and sound system may have distinct devices capabilities as compared to the telephony devices. The term 'device capabilities' refer to hardware capabilities, connectivity capabilities, input/output capabilities, software capabilities of UPnP devices (e.g., TelCPs 106A-N and TCs 108A-N) in the UPnP home network environment. Exemplary device capabilities are given in [Table 1].

The TS 104 is connected to the service provider server 102 via a wireless area network (WAN) 110 and the TelCPs 106A-N are connected to the TS 104 via an UPnP network 112.

In the UPnP home network environment, different types of UPnP devices are connected together. The information associated with the different connected devices can be exposed to the service provider server which enriches communication service experience of the telephony users. The service provider server 102 can take advantage of the device capabilities for providing telephony services. For example, if TS 104 is connected with a High Definition (HD) capable TV, then a peer can initiate a HD Call with the home user.

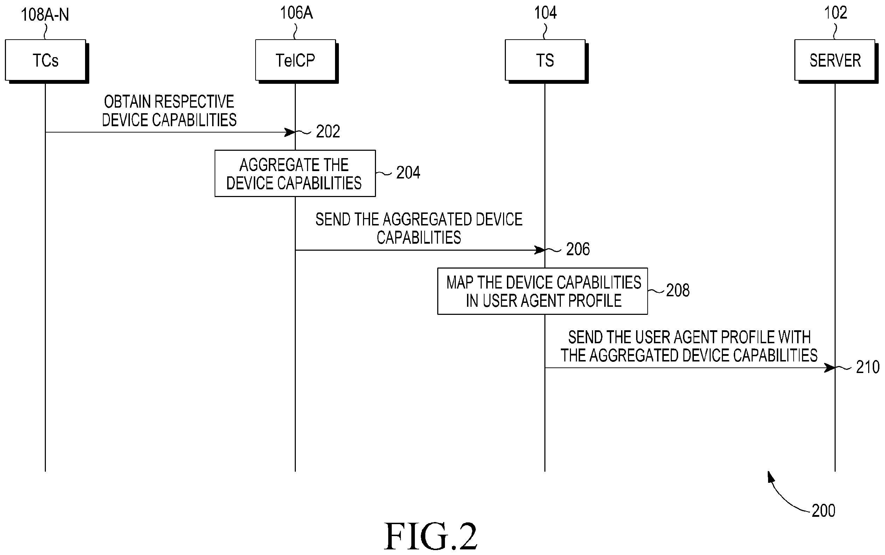

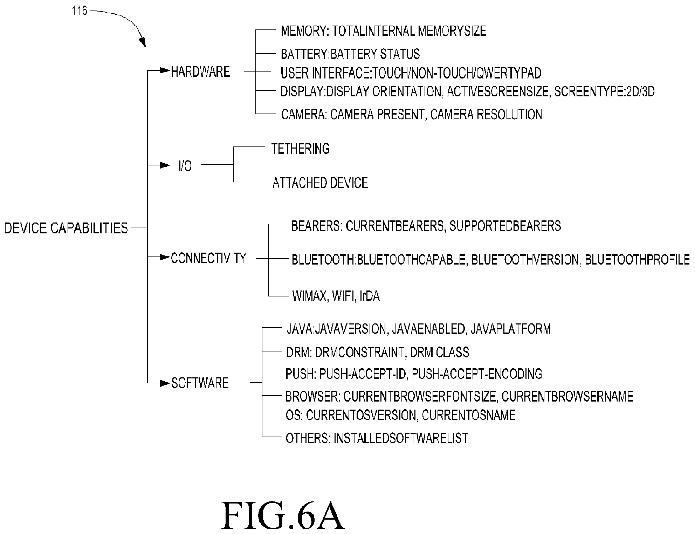

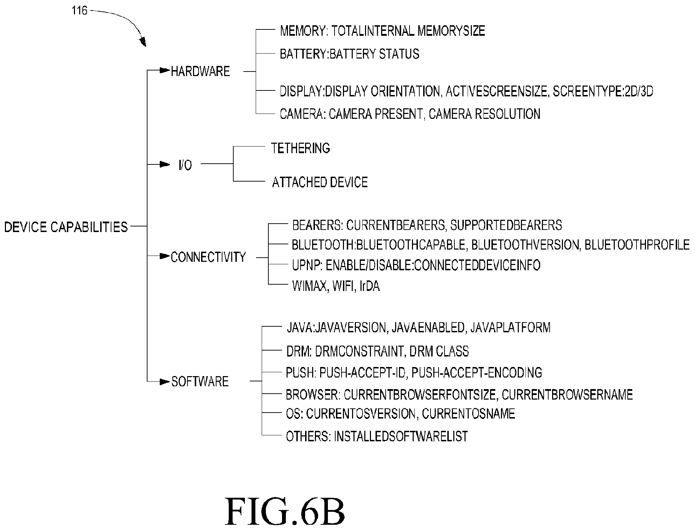

According to one embodiment, the TelCPs 106A-N obtain device capabilities of respective TCs and send the device capabilities to the TS 104. In this embodiment, the TS 104 shares the device capabilities associated with the TCs 108A-N with the service provider server 102 in a user agent profile 116 so that the service provider server 102 provides telephony services to the TCs 108A-N according to the respective device capabilities. In open mobile alliance standard, a user agent profile (UaProf) allows user's mobile device to share device capabilities with a service provider. In the present invention, the TS 104 uses a modified user agent profile 116 for sharing device capabilities of the UPnP devices. Exemplary modified user agent profile 116 containing the device capabilities are illustrated in Figure 6A and 6B. The detailed process of retrieving and sharing device capabilities of TCs with the service provider server 102 is described in Figure 2.

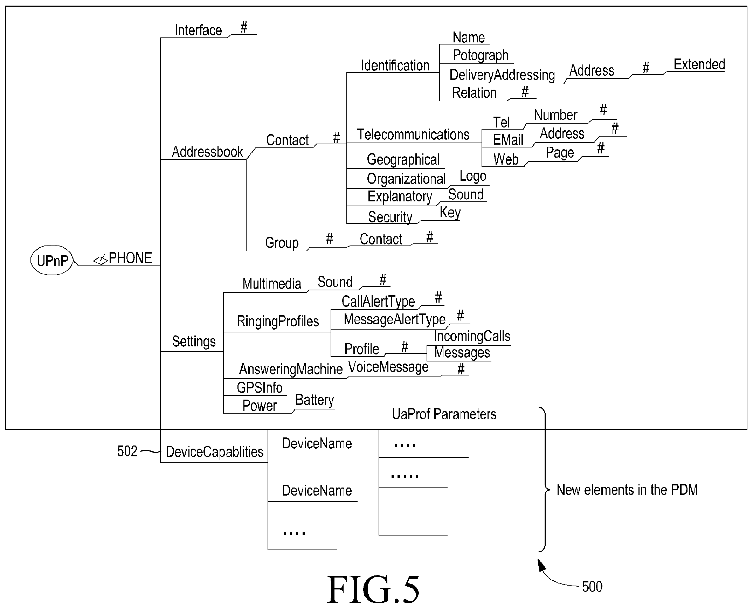

Referring to Figure 2, at step 202, the TelCP 106A obtains device capabilities associated with the TCs 108A-N. At step 204, the TelCP 106A aggregates the device capabilities associated with the TCs 108A-N. At step 206, the TelCP 106A sends the aggregated device capabilities associated with the TCs 108A-N to the TS 104. At the next step, the TS 104 stores the aggregated device capabilities in the device capabilities database 114. In one embodiment, the TS 104 stores the aggregated device capabilities in a phone data model. Exemplary phone data model including device capabilities is shown in Figure 5. In another embodiment, the TS 104 stores the aggregated device capabilities in a home network profile.

At step 208, the TS 104 maps the aggregated device capabilities to a user agent profile 116. At step 210, the TS 104 sends the user agent profile 116 indicating the aggregated device capabilities associated with the TCs 108A-N to the service provider server 102. Thus, based on the device capabilities in the user agent profile 116, the service provider server 102 delivers telephony services on the TCs 108A-N. This helps enhance overall telephony experience of the telephony user.

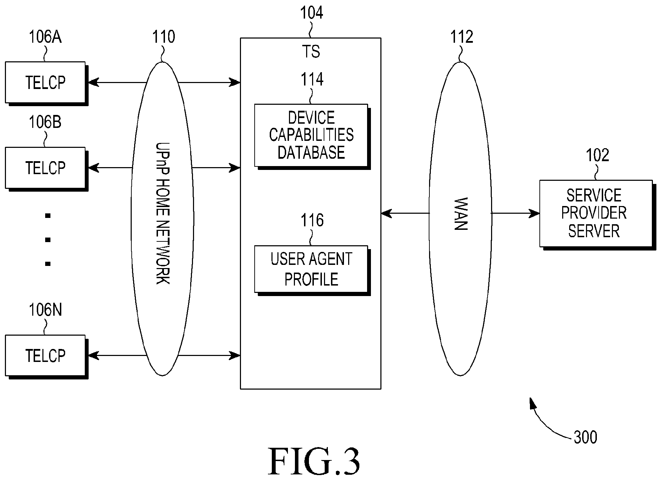

Figure 3 is a block diagram of a system 300 for sharing device capabilities of TelCPs with the service provider server 102, according to another embodiment. The system 300 of Figure 3 is similar to the system 100 of Figure 1, except the system 300 does not include the TCs 108A-N in the home network environment.

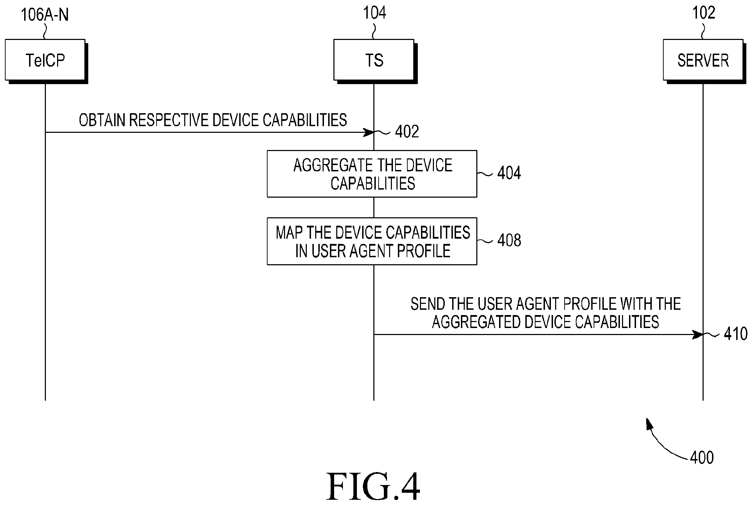

According to another embodiment, the TS 104 obtains device capabilities of TelCPs 106A-N and shares the device capabilities associated with the TelCPs 106A-N with the service provider server 102 in a user agent profile 116 so that the service provider server 102 provides telephony services to the TelCPs 106A-N according to the respective device capabilities. Exemplary user agent profile 116 containing the device capabilities are illustrated in Figure 6A and 6B. The detailed process of retrieving and sharing device capabilities of TelCPs with the service provider server 102 is described in Figure 4.

Referring to Figure 4, at step 402, the TS 104 obtains device capabilities associated with the TelCPs 106A-N. At step 404, the TS 104 aggregates the device capabilities associated with the TelCPs 106A-N. At the next step, the TS 104 stores the aggregated device capabilities in the device capabilities database 114. In one embodiment, the TS 104 stores the aggregated device capabilities in a phone data model. Exemplary phone data model including device capabilities is shown in Figure 5. In another embodiment, the TS 104 stores the aggregated device capabilities in a home network profile.

At step 408, the TS 104 maps the aggregated device capabilities to a user agent profile 116. At step 410, the TS 104 sends the user agent profile 116 indicating the aggregated device capabilities associated with the TelCPs 106A-N to the service provider server 102. Thus, based on the device capabilities in the user agent profile 116, the service provider server 102 delivers telephony services on the TelCPs 106A-N. This helps enhance overall telephony experience of the telephony user.

In accordance to the foregoing description, the TS 104 is configured for dynamically updating changes to the device capabilities of UPnP devices in the device capabilities database 114 and communicating the updates in the device capabilities to the service provider server 102.

Figure 5 is a schematic representation illustrating an exemplary phone data model 500 containing device capabilities of UPnP devices (e.g., TCs 108A-N and TelCPs 106A-N), according to one embodiment. According to the present invention, device capabilities associated with UPnP devices are stored in the phone data model 500. The present invention defines elements to store the device information and capabilities information of the UPnP devices in the phone data model 500. The phone data model 500 includes a new element 'AttachedDeviceCapabilities' 502 for storing device capabilities of UPnP devices. For example, the element 'AttachedDeviceCapabilities' 502 includes one or more sub elements named 'DeviceInfo'. Each sub element represents device capabilities of a single UPnP device. Each sub element may have further sub elements for capturing various types of device capabilities (e.g., hardware, software, input/output, connectivity, etc.). In one embodiment, the TS 104/TelCP 106A can store device capabilities in the phone data model using Call Management Service (CMS) service. For example, the GetValues() and SetValues() CMS actions can be used to manage these information element in the phone data model 500.

Figure 6A is a schematic representation illustrating an exemplary user agent profile 116 with device capabilities of UPnP devices, according to one embodiment. In Figure 6A, representation of device capabilities stored in the phone data model 500 in the user agent profile 116 is depicted. The device capabilities of the UPnP devices are mapped to single capabilities in the user agent profile 116. Additional device capabilities can be included in the user agent profile 116 by defining new elements in the user agent profile 116. For example, in the user agent profile 116, a new element is added under connectivity capability to include capabilities such as WiMAX, WiFi, IrDA, etc.

Figure 6B is a schematic representation illustrating an exemplary user agent profile 116, according to another embodiment. In Figure 6B, the connectivity element in the user agent profile 116 is modified to indicate UPnP support. This enables the service provider server 102 know regarding the support for UPnP telephony service. In one exemplary implementation, the user agent profile 116 may include new elements UPnP, Telephony and Deviceinfo for indicating device capabilities of the UPnP devices in the user agent profile 116.

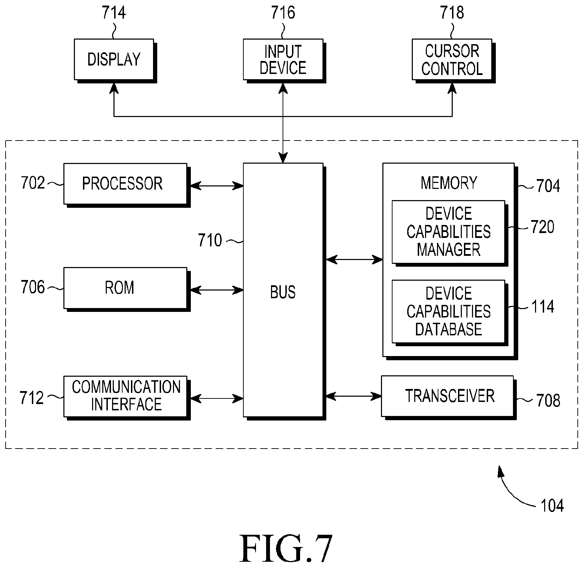

Figure 7 illustrates a block diagram of the TS 104 showing various components for implementing embodiments of the present subject matter. In Figure 7, the TS 104 includes a processor 702, memory 704, a read only memory (ROM) 706, a transceiver 708, a bus 710, a communication interface 712, a display 714, an input device 716, and a cursor control 718.

The processor 702, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 702 may also include embedded controllers, such as generic or programmable logic devices or arrays, application specific integrated circuits, single-chip computers, smart cards, and the like.

The memory 704 may be volatile memory and non-volatile memory. The memory 704 includes a device capabilities manager 720 and the device capabilities database 114, according to the embodiments of the present subject matter. For example, the device capabilities manager 720 obtains device capabilities associated with UPnP devices (e.g., TelCPs 106A-N and/or TCs 108A-N) and stores the device capabilities in the device capabilities database 114. Also, the device capabilities manager 720 sends the device capabilities to the service provider server 102 in a user agent profile.

A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory Sticks™, and the like.

Embodiments of the present subject matter may be implemented in conjunction with modules, including functions, procedures, data structures, and application programs, for performing tasks, or defining abstract data types or low-level hardware contexts. The device capabilities manager 720 may stored in the form of machine-readable instructions on any of the above-mentioned storage media and executed by the processor 702. For example, a computer program may include machine-readable instructions capable of retrieving device capabilities of UPnP devices and providing the device capabilities to the service provider server 102 in an user agent profile, according to the teachings and herein described embodiments of the present subject matter. In one embodiment, the computer program may be included on a storage medium and loaded from the storage medium to a hard drive in the non-volatile memory.

The components such as the transceiver 708, communication interfaces 712, the display 714, the input device 716, and the cursor control 718 are well known to the person skilled in the art and hence the explanation is thereof omitted.

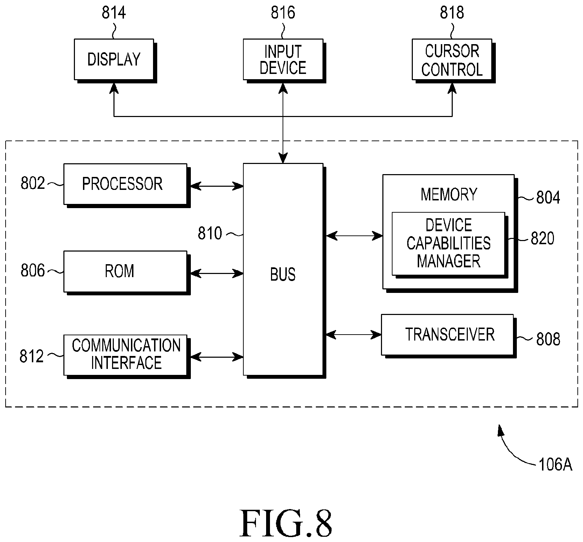

Figure 8 illustrates a block diagram of the TelCP 106A showing various components for implementing embodiments of the present subject matter. In Figure 8, the TelCP 106A includes a processor 802, memory 804, a read only memory (ROM) 806, a transceiver 808, a bus 810, a communication interface 812, a display 814, an input device 816, and a cursor control 818.

The processor 802, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 802 may also include embedded controllers, such as generic or programmable logic devices or arrays, application specific integrated circuits, single-chip computers, smart cards, and the like.

The memory 804 may be volatile memory and non-volatile memory. The memory 804 includes a device capabilities manager 820, according to the embodiments of the present subject matter. For example, the device capabilities manager 820 is configured for obtaining device capabilities associated with UPnP devices (e.g., TCs 108A-N) and sends the device capabilities to the TS 104.

A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory Sticks™, and the like.

Embodiments of the present subject matter may be implemented in conjunction with modules, including functions, procedures, data structures, and application programs, for performing tasks, or defining abstract data types or low-level hardware contexts. The device capabilities manager 820 may stored in the form of machine-readable instructions on any of the above-mentioned storage media and executed by the processor 802. For example, a computer program may include machine-readable instructions capable of retrieving device capabilities of the TCs 108A-N and providing the device capabilities to the TS 104, according to the teachings and herein described embodiments of the present subject matter. In one embodiment, the computer program may be included on a storage medium and loaded from the storage medium to a hard drive in the non-volatile memory.

The components such as the transceiver 808, communication interfaces 812, the display 814, the input device 816, and the cursor control 818 are well known to the person skilled in the art and hence the explanation is thereof omitted.

The present embodiments have been described with reference to specific example embodiments, it will be evident that various modifications and changes may be made to these embodiments without departing from the scope of the present invention as defined by the claims. Furthermore, the various devices, modules, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

### Table 1

**[Table 1]**

| Setting Name | Type | Description and usage |
|---|---|---|
| /UPnP/PHONE/ConnectedD evices/ | SingleInstance | The element stores the information of the devices that are connected to the TS. |
| /UPnP/PHONE/ConnectedD evices/Device/#/ | MultiInstance | The element stores the device information. |
| DeviceType | String | Identifies type of device. The allowed values are: MobileTabletTVPCImplementati on can add more specific elements. |
| /UPnP/PHONE/ConnectedD evices/Device/#/Hardware/ | SingleInstance | This element stores hardware capabilities of the device. |
| AvailableMemory | String | Identifies if the device has memory storage capability. This represents the size as a string.For e.g: "None", "32GB" |
| Battery | Boolean | Identifies if device is using battery. |
| Microphone | Boolean | Identifies if device has the microphone functionality. |
| Speaker | Boolean | Identifies if device has the speaker functionality. |
| /UPnP/PHONE/ConnectedD evice/Device/#/Hardware/Di splay/ | SingleInstance | This element stores display capabilities of the device. |
| DisplayType | String | This element represents the type of the display. The allowed values are:Projector LCDLEDImplementation can add more specific elements. |
| Resolution | String | This element represents the resolution of the screen e.g., "720p". |
| 3DSupport | Boolean | This elements represents if the display supports 3D capabilities of not. |
| /UPnP/PHONE/ConnectedD evices/Device/#/Hardware/C amera/ | SingleInstance | This element stores camera capabilities of the device. |
| Resolution | Integer | This element represents the resolution of the camera. The resolution is represented as an integer in size of mega pixel. E.g., 8, 10 etc. |
| FlashSupport | Boolean | This represents if device is having flash capabilities or not. |
| /UPnP/PHONE/ConnectedD evices/Device/#/Hardware/ UserInterface/ | SingleInstance | This element stores user interface supported by the device. |
| Touch | Boolean | This identifies if device is touch capable. |
| Key-Pad | Boolean | This identifies if device supports keypad. |
| KeyBoard | Boolean | This identifies if device supports full keyboard. |
| PointingDevice | Boolean | This identifies if device supports any pointing device like mouse. |
| /UPnP/PHONE/ConnectedD evices/Device/#/Software/ | SingleInstance | This element stores hardware capabilities of the device. |
| /UPnP/PHONE/ConnectedD evices/Device/#/Software/O S/ | SingleInstance | Identifies the OS details of the device. |
| OSname | String | Represents the name of the OS, like Android/Windows. |
| OSversion | String | Version of the OS. |
| Vendor | String | This optionally represents the vendor information of the OS. |
| /UPnP/PHONE/ConnectedD evices/Device/#/Software/P ush/ | SingleInstance | Identifies the OS details of the device. |
| PushAppIDs | String | Identifies the push application supported by the device. |
| /UPnP/PHONE/ConnectedD evices/Device/#/Software/M ediaSupports/ | SingleInstance | Identifies the Media supported by the device. |
| Audio | Boolean | Identifies if device can handle audio. |
| Video | Boolean | Identifies if device can handle video. |
| MIMETYPE | String | This optional element will be used to represent the supported MIMETYPE by the device. |

## Claims

1. A method by a telephony server (104) for sharing device capabilities of client devices (108) with a service provider entity (102), the method comprising the steps of:
obtaining (206) device capabilities of one or more client devices (108) in a home network environment (110);
storing the device capabilities in a phone data model by using a call management service action;
mapping (208) the device capabilities stored in the phone data model to elements in a user agent profile (116); and
transmitting (210) the user agent profile (116) including the device capabilities to the service provider entity (102),
wherein the service provider entity (102) delivers telephony services to the one or more client devices (108) according to respective device capabilities based on the user agent profile (116).

2. The method of claim 1, wherein the one or more client devices (108) comprise one or more telephony devices and one or more non-telephony devices.

3. The method of claim 1, wherein the user agent profile (116) indicates that the user agent profile (116) comprises the device capabilities of the one or more client devices (108) connected to a telephony device.

4. The method of claim 1, wherein the device capabilities comprise at least one of hardware capabilities, input/output capabilities, connectivity capabilities, and software capabilities.

5. The method of claim 1, wherein storing the device capabilities comprises storing the device capabilities in the phone data model (500) as the phone related information.

6. The method of claim 5, further comprising:
dynamically updating the device capabilities of the one or more client devices (108).

7. A telephony server (104) for sharing device capabilities of client devices with a service provider entity (102), the telephony server (104) comprising:
a memory (704) configured for storing processor-executable instructions; and
at least one processor (702) configured to execute the processor-executable instructions such that the at least one of processor is configured for:
obtaining (206) device capabilities of one or more client devices (108) in a home network environment (110);
storing the device capabilities in a phone data model by using a call management service action;
mapping (208) the device capabilities stored in the phone data model to elements in a user agent profile (116); and
transmitting (210) the user agent profile (116) including the device capabilities to the service provider entity (102),
wherein the service provider entity (102) delivers telephony services to the one or more client devices (108) according to respective device capabilities based on the user agent profile (116).

8. The apparatus (104) of claim 7 adapted to operate according to one of claims 2 to 6.

9. A system (100) for sharing device capabilities of client devices (108) with a service provider entity (102), the system (100) comprising:
one or more client devices (108);
a telephony control point (106) connected to the one or more client devices (108) and configured for:
obtaining (202) device capabilities of the one or more client devices (108) in a home network environment (100); and
a telephony server (104) connected to the telephony control point (106) and configured for:
receiving (206) the device capabilities of the one or more client devices (108);
storing the device capabilities in a phone data model by using a call management service action;
mapping (208) the device capabilities stored in the phone data model to elements in a user agent profile (116); and
transmitting (210) the user agent profile (116) including the device capabilities to the service provider entity (102),
wherein the service provider entity (102) delivers telephony services to the one or more client devices (108) according to respective device capabilities based on the user agent profile (116).

10. A system (300) for sharing device capabilities of telephony control points (106) with a service provider entity (102), the system (300) comprising:
one or more telephony control points (106);
a telephony server (104) connected to the one or more telephony control points (106) and configured for:
obtaining (402) device capabilities of the one or more telephony control points (106) in a home network environment(110);
storing the device capabilities in a phone data model by using a call management service action;
mapping (408) the device capabilities stored in the phone data model to elements in a user agent profile (116); and
transmitting (410) the user agent profile (116) including the device capabilities to the service provider entity (102),
wherein the service provider entity (102) delivers telephony services to the one or more telephony control points (106) according to respective device capabilities based on the user agent profile (116).

11. The system (100) of claim 9 or the system (300) of claim 10, wherein the device capabilities comprises at least one of hardware capabilities, input/output capabilities, connectivity capabilities, and software capabilities.

12. The system (100) of claim 9 or the system (300) of claim 10, wherein the telephony server (104) is configured for storing the device capabilities in a device capabilities database (114).

13. A method by a telephony server (104) for sharing device capabilities of telephony control points (106) with a service provider entity (102), the method comprising:
obtaining (402) device capabilities of one or more telephony control points (106) in a home network environment(110);
storing the device capabilities in a phone data model by using a call management service action;
mapping (408) the device capabilities stored in the phone data model to elements in a user agent profile (116); and
transmitting (410) the user agent profile (116) including the device capabilities to the service provider entity (102),
wherein the service provider entity (102) delivers telephony services to the one or more telephony control points (106) according to respective device capabilities based on the user agent profile (116).

## Patentansprüche

1. Verfahren durch einen Telefonieserver (104) zum Teilen von Gerätefähigkeiten von Client-Geräten (108) mit einer Dienstanbieterentität (102), wobei das Verfahren die folgenden Schritte umfasst:
Abrufen (206) von Gerätefähigkeiten eines oder mehrerer Client-Geräte (108) in einer Heimnetzwerkumgebung (110);
Speichern der Gerätefähigkeiten in einem Telefondatenmodell durch Verwenden einer Rufverwaltungsdienstaktion;
Zuordnen (208) der im Telefondatenmodell gespeicherten Gerätefähigkeiten zu Elementen in einem Benutzeragentenprofil (116); und
Senden (210) des Benutzeragentenprofils (116) mit den Gerätefähigkeiten an die Dienstanbieterentität (102),
wobei die Dienstanbieterentität (102) Telefoniedienste gemäß jeweiligen Gerätefähigkeiten basierend auf dem Benutzeragentenprofil (116) an das eine oder die mehreren Client-Geräte (108) liefert.

2. Verfahren nach Anspruch 1, wobei das eine oder die mehreren Client-Geräte (108) ein oder mehrere Telefoniegeräte und ein oder mehrere Nicht-Telefoniegeräte umfassen.

3. Verfahren nach Anspruch 1, wobei das Benutzeragentenprofil (116) angibt, dass das Benutzeragentenprofil (116) die Gerätefähigkeiten des einen oder der mehreren Client-Geräte (108) umfasst, die mit einem Telefoniegerät verbunden sind.

4. Verfahren nach Anspruch 1, wobei die Gerätefähigkeiten mindestens eine von Hardwarefähigkeiten, Eingabe-/Ausgabe-Fähigkeiten, Konnektivitätsfähigkeiten und Softwarefähigkeiten umfassen.

5. Verfahren nach Anspruch 1, wobei das Speichern der Gerätefähigkeiten ein Speichern der Gerätefähigkeiten im Telefondatenmodell (500) als telefonbezogene Informationen umfasst.

6. Verfahren nach Anspruch 5, ferner umfassend:
dynamisches Aktualisieren der Gerätefähigkeiten des einen oder der mehreren Client-Geräte (108).

7. Telefonieserver (104) zum Teilen von Gerätefähigkeiten von Client-Geräten mit einer Dienstanbieterentität (102), wobei der Telefonieserver (104) umfasst:
einen Speicher (704), der zum Speichern von prozessorausführbaren Anweisungen konfiguriert ist; und
mindestens einen Prozessor (702), der zum Ausführen der prozessorausführbaren Anweisungen konfiguriert ist, derart dass der mindestens eine Prozessor konfiguriert ist zum:
Abrufen (206) von Gerätefähigkeiten eines oder mehrerer Client-Geräte (108) in einer Heimnetzwerkumgebung (110);
Speichern der Gerätefähigkeiten in einem Telefondatenmodell durch Verwenden einer Rufverwaltungsdienstaktion;
Zuordnen (208) der im Telefondatenmodell gespeicherten Gerätefähigkeiten zu Elementen in einem Benutzeragentenprofil (116); und
Senden (210) des Benutzeragentenprofils (116) mit den Gerätefähigkeiten an die Dienstanbieterentität (102),
wobei die Dienstanbieterentität (102) Telefoniedienste gemäß jeweiligen Gerätefähigkeiten basierend auf dem Benutzeragentenprofil (116) an das eine oder die mehreren Client-Geräte (108) liefert.

8. Vorrichtung (104) nach Anspruch 7, die so ausgelegt ist, dass sie nach einem der Ansprüche 2 bis 6 funktioniert.

9. System (100) zum Teilen von Gerätefähigkeiten von Client-Geräten (108) mit einer Dienstanbieterentität (102), wobei das System (100) umfasst:
ein oder mehrere Client-Geräte (108);
einen Telefonie-Kontrollpunkt (106), der mit dem einen oder den mehreren Client-Geräten (108) verbunden und konfiguriert ist zum:
Abrufen (202) von Gerätefähigkeiten des einen oder der mehreren Client-Geräte (108) in einer Heimnetzwerkumgebung (100); und
einen Telefonieserver (104), der mit dem Telefonie-Kontrollpunkt (106) verbunden und konfiguriert ist zum:
Empfangen (206) der Gerätefähigkeiten des einen oder der mehreren Client-Geräte (108);
Speichern der Gerätefähigkeiten in einem Telefondatenmodell durch Verwenden einer Rufverwaltungsdienstaktion;
Zuordnen (208) der im Telefondatenmodell gespeicherten Gerätefähigkeiten zu Elementen in einem Benutzeragentenprofil (116); und
Senden (210) des Benutzeragentenprofils (116) mit den Gerätefähigkeiten an die Dienstanbieterentität (102),
wobei die Dienstanbieterentität (102) Telefoniedienste gemäß jeweiligen Gerätefähigkeiten basierend auf dem Benutzeragentenprofil (116) an das eine oder die mehreren Client-Geräte (108) liefert.

10. System (300) zum Teilen von Gerätefähigkeiten von Telefonie-Kontrollpunkten (106) mit einer Dienstanbieterentität (102), wobei das System (300) umfasst:
einen oder mehrere Telefonie-Kontrollpunkte (106);
einen Telefonieserver (104), der mit dem einen oder den mehreren Telefonie-Kontrollpunkten (106) verbunden und konfiguriert ist zum:
Abrufen (402) von Gerätefähigkeiten des einen oder der mehreren Telefonie-Kontrollpunkte (106) in einer Heimnetzwerkumgebung (110);
Speichern der Gerätefähigkeiten in einem Telefondatenmodell durch Verwenden einer Rufverwaltungsdienstaktion;
Zuordnen (408) der im Telefondatenmodell gespeicherten Gerätefähigkeiten zu Elementen in einem Benutzeragentenprofil (116); und
Senden (410) des Benutzeragentenprofils (116) mit den Gerätefähigkeiten an die Dienstanbieterentität (102),
wobei die Dienstanbieterentität (102) Telefoniedienste gemäß jeweiligen Gerätefähigkeiten basierend auf dem Benutzeragentenprofil (116) an den einen oder die mehreren Telefonie-Kontrollpunkte (106) liefert.

11. System (100) nach Anspruch 9 oder System (300) nach Anspruch 10, wobei die Gerätefähigkeiten mindestens eine von Hardwarefähigkeiten, Eingabe-/Ausgabe-Fähigkeiten, Konnektivitätsfähigkeiten und Softwarefähigkeiten umfassen.

12. System (100) nach Anspruch 9 oder System (300) nach Anspruch 10, wobei der Telefonieserver (104) zum Speichern der Gerätefähigkeiten in einer Gerätefähigkeiten-Datenbank (114) konfiguriert ist.

13. Verfahren durch einen Telefonieserver (104) zum Teilen von Gerätefähigkeiten von Telefonie-Kontrollpunkten (106) mit einer Dienstanbieterentität (102), wobei das Verfahren umfasst:
Abrufen (402) von Gerätefähigkeiten eines oder mehrerer Telefonie-Kontrollpunkte (106) in einer Heimnetzwerkumgebung (110);
Speichern der Gerätefähigkeiten in einem Telefondatenmodell durch Verwenden einer Rufverwaltungsdienstaktion;
Zuordnen (408) der im Telefondatenmodell gespeicherten Gerätefähigkeiten zu Elementen in einem Benutzeragentenprofil (116); und
Senden (410) des Benutzeragentenprofils (116) mit den Gerätefähigkeiten an die Dienstanbieterentität (102),
wobei die Dienstanbieterentität (102) Telefoniedienste gemäß jeweiligen Gerätefähigkeiten basierend auf dem Benutzeragentenprofil (116) an den einen oder die mehreren Telefonie-Kontrollpunkte (106) liefert.

## Revendications

1. Procédé permettant à un serveur téléphonique (104) de partager des capacités de dispositif de dispositifs client (108) avec une entité de fournisseur de service (102), le procédé comprenant les étapes de :
obtention (206) de capacités de dispositif d'un ou plusieurs dispositifs client (108) dans un environnement de réseau domestique (110) ;
stockage des capacités de dispositif dans un modèle de données de téléphone en utilisant une action de service de gestion d'appels ;
mappage (208) des capacités de dispositif stockées dans le modèle de données de téléphone à des éléments dans un profil d'agent utilisateur (116) ; et
transmission (210) du profil d'agent utilisateur (116) incluant les capacités de dispositif à l'entité de fournisseur de service (102),
dans lequel l'entité de fournisseur de service (102) délivre des services de téléphonie à l'un ou plusieurs dispositifs client (108) en fonction de capacités de dispositif respectives sur la base du profil d'agent utilisateur (116).

2. Procédé selon la revendication 1, dans lequel l'un ou plusieurs dispositifs client (108) comprennent un ou plusieurs dispositifs de téléphonie et un ou plusieurs dispositifs de non-téléphonie.

3. Procédé selon la revendication 1, dans lequel le profil d'agent utilisateur (116) indique que le profil d'agent utilisateur (116) comprend les capacités de dispositif de l'un ou plusieurs dispositifs client (108) connectés à un dispositif de téléphonie.

4. Procédé selon la revendication 1, dans lequel les capacités de dispositif comprennent au moins l'une de capacités matérielles, capacités d'entrée/sortie, capacités de connectivité, et capacités logicielles.

5. Procédé selon la revendication 1, dans lequel le stockage des capacités de dispositif comprend le stockage des capacités de dispositif dans le modèle de données de téléphone (500) en tant que les informations liées au téléphone.

6. Procédé selon la revendication 5, comprenant en outre :
l'actualisation dynamique des capacités de dispositif de l'un ou plusieurs dispositifs client (108).

7. Serveur téléphonique (104) permettant de partager des capacités de dispositif de dispositifs client avec une entité de fournisseur de service (102), le serveur téléphonique (104) comprenant :
une mémoire (704) configurée pour stocker des instructions exécutables par un processeur ; et au moins un processeur (702) configuré pour exécuter les instructions exécutables par un processeur de telle manière à ce que l'au moins un processeur soit configuré pour :
l'obtention (206) de capacités de dispositif d'un ou plusieurs dispositifs client (108) dans un environnement de réseau domestique (110) ;
le stockage des capacités de dispositif dans un modèle de données de téléphone en utilisant une action de service de gestion d'appels ;
le mappage (208) des capacités de dispositif stockées dans le modèle de données de téléphone à des éléments dans un profil d'agent utilisateur (116) ; et
la transmission (210) du profil d'agent utilisateur (116) incluant les capacités de dispositif à l'entité de fournisseur de service (102),
dans lequel l'entité de fournisseur de service (102) délivre des services de téléphonie à l'un ou plusieurs dispositifs client (108) en fonction de capacités de dispositif respectives sur la base du profil d'agent utilisateur (116).

8. Appareil (104) selon la revendication 7, adapté pour fonctionner selon l'une des revendications 2 à 6.

9. Système (100) de partage de capacités de dispositif de dispositifs client (108) avec une entité de fournisseur de service (102), le système (100) comprenant :
un ou plusieurs dispositifs client (108) ;
un point de commande de téléphonie (106) connecté à l'un ou plusieurs dispositifs clients (108) et configuré pour :
l'obtention (202) de capacités de dispositif de l'un ou plusieurs dispositifs client (108) dans un environnement de réseau domestique (100) ; et
un serveur téléphonique (104) connecté au point de commande de téléphonie (106) et configuré pour :
la réception (206) des capacités de dispositif de l'un ou plusieurs dispositifs client (108) ; stocker les capacités de dispositif dans un modèle de donnée de téléphone en utilisant une action de service de gestion d'appel ;
le mappage (208) des capacités de dispositif stockées dans le modèle de données de téléphone à des éléments dans un profil d'agent utilisateur (116) ; et
la transmission (210) du profil d'agent utilisateur (116) incluant les capacités de dispositif à l'entité de fournisseur de service (102),
dans lequel l'entité de fournisseur de service (102) délivre des services de téléphonie à l'un ou plusieurs dispositifs client (108) en fonction de capacités de dispositif respectives sur la base du profil d'agent utilisateur (116).

10. Système (300) de partage de capacités de dispositif de points de commande de téléphonie (106) avec une entité de fournisseur de service (102), le système (300) comprenant :
un ou plusieurs points de commande de téléphonie (106) ;
un serveur téléphonique (104) connecté à l'un ou plusieurs points de commande de téléphonie (106) et configuré pour :
l'obtention (402) de capacités de dispositif de l'un ou plusieurs points de commande de téléphonie (106) dans un environnement de réseau domestique (110) ;
le stockage des capacités de dispositif dans un modèle de données de téléphone en utilisant une action de service de gestion d'appels ;
le mappage (408) des capacités de dispositif stockées dans le modèle de données de téléphone à des éléments dans un profil d'agent utilisateur (116) ; et
la transmission (410) du profil d'agent utilisateur (116) incluant les capacités de dispositif à l'entité de fournisseur de service (102),
dans lequel l'entité de fournisseur de service (102) délivre des services de téléphonie à l'un ou plusieurs points de commande de téléphonie (106) en fonction de capacités de dispositif respectives sur la base du profil d'agent utilisateur (116).

11. Système (100) selon la revendication 9 ou système (300) selon la revendication 10, dans lequel les capacités de dispositif comprennent au moins l'une de capacités matérielles, capacités d'entrée/sortie, capacités de connectivité, et capacités logicielles.

12. Système (100) selon la revendication 9 ou système (300) selon la revendication 10, dans lequel le serveur téléphonique (104) est configuré pour stocker les capacités de dispositif dans une base de données de capacités de dispositif (114).

13. Procédé par un serveur téléphonique (104) de partage de capacités de dispositif de points de commande de téléphonie (106) avec une entité de fournisseur de service (102), le procédé comprenant :
l'obtention (402) de capacités de dispositif de l'un ou plusieurs points de commande de téléphonie (106) dans un environnement de réseau domestique (110) ;
le stockage des capacités de dispositif dans un modèle de données de téléphone en utilisant une action de service de gestion d'appels ;
le mappage (408) des capacités de dispositif stockées dans le modèle de données de téléphone à des éléments dans un profil d'agent utilisateur (116) ; et
la transmission (410) du profil d'agent utilisateur (116) incluant les capacités de dispositif à l'entité de fournisseur de service (102),
dans lequel l'entité de fournisseur de service (102) délivre des services de téléphonie à l'un ou plusieurs points de commande de téléphonie (106) en fonction de capacités de dispositif respectives sur la base du profil d'agent utilisateur (116).
